# EUROPEAN PATENT SPECIFICATION

(11) **EP 2 775 342 B1**
(45) Date of publication and mention of the grant of the patent: **05.04.2017**
(21) Application number: 12844923.8
(22) Date of filing: 31.08.2012
(51) Int. Cl.: G02C 11/02, G02C 5/16, G02C 5/14, A44C 17/02

(54) **TEMPLE STRUCTURE WITH EMBEDDED DIAMOND AND EYEGLASS AND DIAMOND-EMBEDDING METHOD THEREOF**
BRILLENBÜGELSTRUKTUR MIT EINGEBETTETEM DIAMANTEN UND BRILLEN SOWIE DIAMANTENEINBETTUNGSVERFAHREN DAFÜR
STRUCTURE DE BRANCHE À DIAMANT INTÉGRÉ ET LUNETTES ET PROCÉDÉ D'INTÉGRATION DE DIAMANT DANS LA STRUCTURE DE BRANCHE

(30) Priority: 31.10.2011 CN 201110338314
(43) Date of publication of application: 10.09.2014
(73) Proprietor: Wenzhou Bada Optical Co., Ltd., Wenzhou, Zhejiang 325041 (CN)
(72) Inventor: CHEN, Shousong, Wenzhou, Zhejiang 325041 (CN)
(74) Representative: Viering, Jentschura & Partner mbB Patent- und Rechtsanwälte
(86) International application number: PCT/CN2012/080845
(87) International publication number: WO 2013/063978

(56) References cited:
- WO-A1-2011/107410
- CN-A- 1 241 267
- CN-A- 101 794 032
- CN-A- 101 983 021
- CN-A- 102 354 060
- CN-U- 202 306 047
- DE-U1- 9 300 156
- FR-A1- 2 743 267
- JP-A- H01 100 512
- JP-A- H11 133 362
- JP-A- 2000 236 922
- JP-A- 2002 258 221
- JP-A- 2008 139 425
- JP-B2- 3 171 309
- KR-A- 20080 041 829
- US-A- 3 739 598
- US-A1- 2007 095 104

## Description

### Field of the Invention

The present invention relates to a set of diamond inlaid eyeglasses and a diamond inlaying method, in particular to a diamond inlaid eyeglass temple structure, a set of eyeglasses, and a diamond inlaying method.

### Background of the Invention

As people's cultural and living standard is improved and vision care is popularized, eyeglasses take an important role in people's life. A set of eyeglasses mainly consists of a pair of lens and an eyeglass frame, wherein, the eyeglass frame is mainly used to support the lens so that the eyeglasses can be worn in front of the eyes; in addition, the eyeglass frame also has beautifying and decorating effect; therefore, diamond inlaid eyeglass frames have emerged to meet peoples demand for fashion. Existing diamond inlaid eyeglass frames are manufactured by inlaying diamonds in eyeglass frames. An eyeglass frame consists of eyeglass rims and eyeglass temples, wherein, the eyeglass temples are bored at the outer side, and diamonds are inlaid in the bores and bonded to the eyeglass temples with glue. The diamond inlaying work is time-consuming and labor-intensive, and has low production efficiency. In addition, the diamonds may fall off easily, since they are bonded with glue. Relevant documents within this technical field and that of the insertion of jewels are the following ones: KR20080041829, JP2002258221, US2007/095104, US3739598 and FR2743267.

### Summary of the Invention

To overcome the drawbacks of diamond inlaid eyeglass frames in the prior art, i.e., inefficiency in diamond inlaying and easy diamond falling-off, the present invention provides a diamond inlaid eyeglass temple structure, a set of eyeglasses, and a diamond inlaying method, wherein, in the diamond inlaid eyeglass temple structure, the diamonds can be inlaid in a time-saving and labor-saving manner at high production efficiency, and are fixed firmly and will not fall off easily; with the diamond inlaying method,the process of diamond inlaying have simple steps and are easy to operate, and can achieve high production efficiency.

The technical scheme of the present invention is: a diamond inlaid eyeglass temple structure, comprising an eyeglass temple body and a diamond, wherein, the diamond has a crown part, a girdle part, and a pavilion part, the eyeglass temple body has an elastic body, which has an inwardly-bending elastic tendency, the two ends of the elastic body are connected at the outer side with a first gripping part and a second gripping part in a cantilevered manner respectively, the first gripping part and second gripping part have a first slot and a second slot on their opposite end surfaces respectively, the first slot and second slot grip the diamond at the girdle part in symmetry, with the crown part of the diamond exposed at the outer side of the first gripping part and second gripping part, the diamond is gripped firmly under the elastic force of the elastic body, and the diamond has a culet, which props against the elastic body.

The eyeglass temple body, elastic body, first gripping part, and second gripping part are formed in an integral structure, and the contour between the elastic body and the first gripping part and between the elastic body and the second gripping part is in a broken elliptical form, equally spaced waveform, or rectangular waveform.

The two sides of the first slot and second slot fit the crown part and pavilion part of the diamond respectively.

A set of eyeglasses comprising the above-mentioned diamond inlaid eyeglass temple structures, further comprises an eyeglass rim and hinges, wherein, the eyeglass rim is mounted with lens and has temple bendings and a nose bridge, and the eyeglass temple bodies and temple bendings are fixed to the two ends of the hinges respectively.

A diamond inlaying method for the above-mentioned diamond inlaid eyeglass temple structure, comprising the following steps: (1) selecting an integral piece of material, producing an eyeglass temple body by wire cutting, and separating the eyeglass temple body into elastic body, first gripping part, second gripping part, and first slot and second slot; (2) bending the elastic body outwards, placing a diamond into the space between the first gripping part and the second gripping part, aligning the girdle part of the diamond to the first slot and second slot, and positioning the diamond at the center of the first slot or second slot; (3) loosening the elastic body while keeping the relative position of the diamond unchanged, so that the first gripping part and second gripping part grip the diamond firmly under the elastic force of the elastic body. The present invention has the following beneficial effects: with the technical scheme described above, diamonds can be inlaid in the diamond inlaid eyeglass temple structures and eyeglasses in a time-saving and labor-saving manner at high production efficiency, and the diamonds can be fixed firmly and will not fall off easily. With the diamond inlaying method, the diamond inlaying process has simple steps and is easy to operate, and can achieve high production efficiency.

### Brief Description of the Drawings

Figure 1 is a schematic structural diagram of the present invention;
Figure 2 is a right view of the structure shown in Figure 1;
Figure 3 is an enlarged view of part A in Figure 1;
Figure 4 is a schematic diagram of a second embodiment of the mounting structure of diamond 2;
Figure 5 is a schematic diagram of a third embodiment of the mounting structure of diamond 2.

Among the figures: 1 - eyeglass temple body, 2 - diamond, 21 - crown part, 22 - girdle part, 23 - pavilion part, 24 - culet, 3 - elastic body, 4 - first
gripping part, 41- first slot, 5- second gripping part, 51- second slot, 6-eyeglass rim, 7 - hinge, 8 - temple bending, 9 - nose bridge, 10 - lens.

### Detailed Description of the Embodiments

Hereunder the present invention will be detailed, with reference to the accompanying drawings.

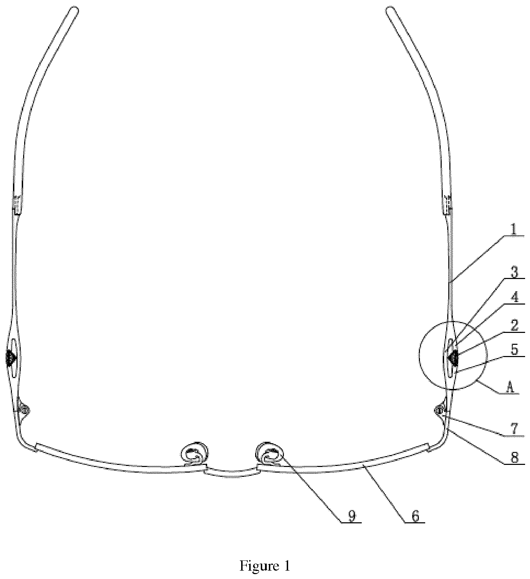

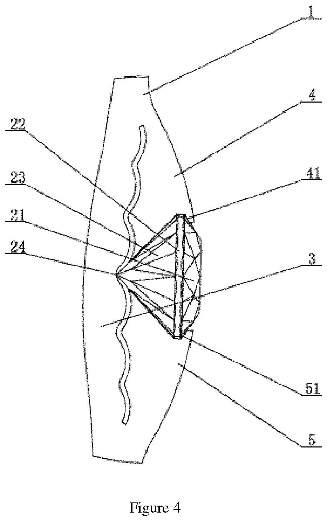

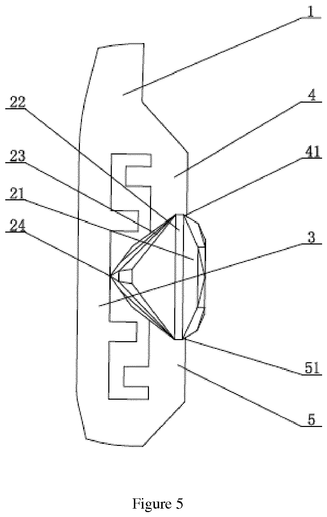

As shown in Figure 1 and Figures 2-5, a diamond inlaid eyeglass temple structure, comprising an eyeglass temple body and a diamond 2, wherein, the diamond 2 has a crown part 21, a girdle part 22, and a pavilion part 23, and is a round diamond or square diamond; the eyeglass temple body 1 has a elastic body 3, which has an inwardly-bending elastic tendency, that is to say, the middle part of the elastic body 3 tends to bend towards inner side, wherein, the inner side here refers to the side near the cheek, while the opposite side is outer side. The two ends of the elastic body 3 are connected at the outer side with a first gripping part 4 and a second gripping part 5 in a cantilevered manner respectively, the first gripping part 4 and second gripping part 5 have a first slot 41 and second slot 51 on their opposite end surfaces respectively, the first slot 41 and second slot 51 grip the girdle part 22 of the diamond 2 in symmetry, with the crown part of the diamond 2 exposed at the outer side of the first gripping part 4 and second gripping part 5, so that the diamond 2 is gripped firmly under the elastic force of the elastic body 3. In the diamond inlaid eyeglass temple structure, the diamond 2 can be inlaid in a time-saving and labor-saving manner at high production efficiency, and can be fixed firmly and will not fall off easily.

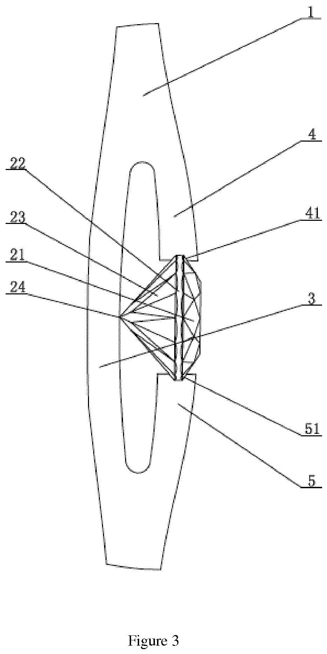

As shown in Figure 3, the diamond 2 has a culet 24, which props the elastic body 3. The elastic force of the elastic body 3 acts on the diamond 2, creating high friction force between the crown part 21 of the diamond 2 and the sides of the first slot 41 and second slot 51; thus, the diamond 2 will not play and therefore will not fall off easily.

As shown in Figures 1, 2, 3, 4, and 5, the eyeglass temple body 1, elastic body 3, first gripping part 4, and second gripping part 5 are formed in an integral structure, and the contour between the elastic body 3 and the first gripping part 4 and between the elastic body 3 and the second gripping part 5 is in a broken elliptical form, equally spaced waveform, or rectangular waveform. The inner side of the elastic body 3 smoothly transits to the eyeglass temple body 1; thus, the strength at the elastic body 3 is ensured, and the eyeglasses can be worn comfortably and have esthetic appearance. The contour between the elastic body 3 and the first gripping part 4 and the elastic body 3 and the second gripping part 5 is not limited to the above-mentioned forms, which is to say, the contour can be in any form, as long as enough strength of the first gripping part 4 and second gripping part 5 can be ensured so that the first gripping part 4 and second gripping part 5 can grip the diamond 2 firmly under the elastic force of the elastic body 3.

As shown in Figures 3, 4, and 5, the two sides of the first slot 41 and second slot 51 fit the crown part 21 and pavilion part 23 of the diamond 2 respectively. Thus, additional contact points between the first gripping part 4 and second gripping part 5 and the diamond 2 are obtained, so that the diamond 2 is kept stably and will not get loose.

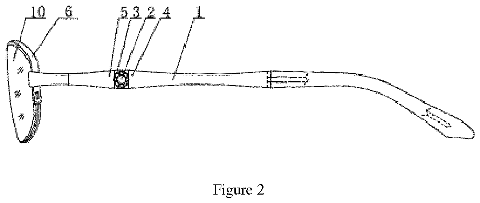

A set of eyeglasses comprising the above-mentioned diamond inlaid eyeglass temple structures, as shown in Figure 1 and Figure 2, further comprises an eyeglass rim 6 and hinges 7, wherein, the eyeglass rim 6 is mounted with lens 10 and has temple bendings 8 and a nose bridge 9, and the eyeglass temple bodies 1 and temple bendings 8 are fixed to the two ends of the hinges 7 respectively. In the eyeglasses with diamond inlaid eyeglass temples, the diamonds 2 can be inlaid in a time-saving and labor-saving manner at high production efficiency, and can be fixed firmly and will not fall off easily.

A diamond inlaying method for the above-mentioned diamond inlaid eyeglass temple structure, comprising the following steps: (1) selecting an integral piece of material (in this embodiment, a 1.2mm stainless steel plate is used, and round diamonds with 5.Omm girdle diameter or square diamonds in 5.0mmx5.0mm dimensions are used), producing an eyeglass temple body 1 by wire cutting, and separating the eyeglass temple body 1 into elastic body 3, first gripping part 4, second gripping part 5, and first slot 41 and second slot 51; (2) bending the elastic body 3 outwards to widen the spacing between the first gripping part 4 and the second gripping part 5, placing a diamond 2 into the space between the first gripping part 4 and the second gripping part 5, aligning the girdle part 22 of the diamond 2 to the first slot 41 and second slot 51, and positioning the diamond at the center of the first slot 41 or second slot 51; (3) loosening the elastic body 3 while keeping the relative position of the diamond 2 unchanged, so that the first gripping part 41 and second gripping part 51 grip the diamond 2 firmly under the elastic force of the elastic body 3. With the diamond inlaying method, the diamond inlaying process has simple steps and is easy to operate, and can achieve high production efficiency.

## Claims

1. A diamond inlaid eyeglass temple structure, comprising an eyeglass temple body (1) and a diamond (2), wherein, the diamond (2) has a crown part (21), a girdle part (22), and a pavilion part (23), **characterized in that** the eyeglass temple body (1) has an elastic body (3), which has an inwardly-bending elastic tendency, the two ends of the elastic body (3) are connected at the outer side with a first gripping part (4) and a second gripping part (5) in a cantilevered manner respectively, the first gripping part (4) and second gripping part (5) have a first slot (41) and a second slot (51) on their opposite end surfaces respectively, the first slot (41) and second slot (51) grip the diamond (2) at the girdle part (22) in symmetry, with the crown part (21) of the diamond (2) exposed at the outer side of the first gripping part (4) and second gripping part (5), the diamond (2) is gripped firmly under the elastic force of the elastic body (3), and the diamond (2) has a culet (24), which props against the elastic body (3).

2. The diamond inlaid eyeglass temple structure according to claim 1, wherein, the eyeglass temple body (1), elastic body (3), first gripping part (4), and second gripping part (5) are formed in an integral structure, and the contour between the elastic body (3) and the first gripping part (4) and between the elastic body (3) and the second gripping part (5) is in a broken elliptical form, equally spaced waveform, or rectangular waveform.

3. The diamond inlaid eyeglass temple structure according to claim 1 or 2, wherein, the two sides of the first slot (41) and second slot (51) fit the crown part (21) and pavilion part (23) of the diamond (2) respectively.

4. A set of eyeglasses comprising the diamond inlaid eyeglass temple structures as set forth in claim 1, further comprising an eyeglass rim (6) and hinges (7), wherein, the eyeglass rim (6) is mounted with lens (10) and has temple bendings (8) and a nose bridge (9), and the eyeglass temple bodies (1) and temple bendings (8) are fixed to the two ends of the hinges (7) respectively.

5. A diamond inlaying method for the diamond inlaid eyeglass temple structure as set forth in claim 1, comprising the following steps: (1) selecting an integral piece of material, producing an eyeglass temple body (1) by wire cutting, and separating the eyeglass temple body (1) into elastic body (3), first gripping part (4), second gripping part (5), and first slot (41) and second slot (51); (2) bending the elastic body (3) outwards, placing a diamond (2) into the space between the first gripping part (4) and the second gripping part (5), aligning the girdle part (22) of the diamond (2) to the first slot (41) and second slot (51), and positioning the diamond (2) at the center of the first slot (41) or second slot (51); (3) loosening the elastic body (3) while keeping the relative position of the diamond (2) unchanged, so that the first gripping part (4) and second gripping part (5) grip the diamond (2) firmly under the elastic force of the elastic body (3).

## Patentansprüche

1. Eine Diamant-Einlege-Brillenbügelstruktur, aufweisend einen Brillenbügelkörper (1) und einen Diamanten (2), wobei der Diamant (2) einen oberen Teil (21), einen Rundistenteil (22) und einen unteren Teil (23) aufweist,
**dadurch gekennzeichnet, dass**
der Brillenbügelkörper (1) einen elastischen Körper (3) aufweist, der eine elastische Biegetendenz nach innen hat, wobei die zwei Enden des elastischen Körpers (3) an der Außenseite mit einem ersten Greifteil (4) beziehungsweise mit einem zweiten Greifteil (5) in freitragender Weise verbunden sind, wobei der erste Greifteil (4) und der zweite Greifteil (5) einen ersten Schlitz (41) beziehungsweise einen zweiten Schlitz (51) an den sich gegenüberliegenden Endflächen aufweisen, wobei der erste Schlitz (41) und der zweite Schlitz (51) den Diamanten (2) an dem Rundistenteil (22) symmetrisch greifen, wobei der obere Teil (21) des Diamanten (2) an der Außenseite des ersten Greifteils (4) und des zweiten Greifteils (5) freiliegt, wobei der Diamant (2) fest unter der elastischen Kraft des elastischen Körpers (3) gegriffen wird, und wobei der Diamant (2) eine Kalette (24) aufweist, die gegen den elastischen Körper (3) gestützt ist.

2. Die Diamant-Einlege-Brillenbügelstruktur gemäß Anspruch 1, wobei der Brillenbügelkörper (1), der elastische Körper (3), der erste Greifteil (4) und der zweite Greifteil (5) in einer integralen Struktur gebildet sind, und die Kontur zwischen dem elastischen Körper (3) und dem ersten Greifteil (4) und zwischen dem elastischen Körper (3) und dem zweiten Greifteil (5) in einer gebrochenen elliptischen Form, einer gleichmäßigen Wellenform oder einer rechtwinkligen Wellenform ist.

3. Die Diamant-Einlege-Brillenbügelstruktur gemäß Anspruch 1 oder 2, wobei die zwei Seiten des ersten Schlitzes (41) und des zweiten Schlitzes (51) zu dem oberen Teil (21) des Diamanten (2) beziehungsweise zu dem unteren Teil (23) des Diamanten (2) passen.

4. Eine Brille, welche die Diamant-Einlege-Brillenbügelstrukturen gemäß Anspruch 1 aufweist, weißt ferner einen Brillenrahmen (6) und Gelenke (7) auf, wobei der Brillenrahmen (6) mit der Linse (10) montiert ist und Bügelbiegungen (8) und eine Nasenbrücke (9) aufweist, und die Brillenbügelkörper (1) und Bügelbiegungen (8) an den zwei Enden der Gelenke (7) befestigt sind.

5. Ein Diamant-Einlegeverfahren für die Diamant-Einlege-Brillenbügelstruktur gemäß Anspruch 1, aufweisend die folgenden Schritte:
(1) Auswählen eines integralen Materialstücks, Produzieren eines Brillenbügelkörpers (1) durch Drahtschneiden, und Separieren des Brillenbügelkörpers (1) in einen elastischen Körper (3), einen ersten Greifteil (4), einen zweiten Greifteil (5) und einen ersten Schlitz (41) und einen zweiten Schlitz (51);
(2) Biegen des elastischen Körpers (3) nach außen, Platzieren eines Diamanten (2) in den Freiraum zwischen dem ersten Greifteil (4) und dem zweiten Greifteil (5), Ausrichten des Rundistenteils (22) des Diamanten (2) an dem ersten Schlitz (41) und dem zweiten Schlitz (51), und Positionieren des Diamanten (2) in der Mitte des ersten Schlitzes (41) oder des zweiten Schlitzes (51);
(3) Lösen des elastischen Körpers (3), während die relative Position des Diamanten (2) unverändert bleibt, sodass der erste Greifteil (4) und der zweite Greifteil (5) den Diamanten (2) unter der elastischen Kraft des elastischen Körpers (3) fest greifen.

## Revendications

1. Structure de branche de lunettes incrustée de diamant, comprenant un corps de branche de lunettes (1) et un diamant (2), dans laquelle le diamant (2) a une partie de couronne (21), une partie de bord (22) et une partie de pavillon (23), **caractérisée en ce que** le corps de branche de lunettes (1) a un corps élastique (3) qui a une tendance élastique à se plier vers l'intérieur, les deux extrémités du corps élastique (3) sont raccordées au niveau du côté externe avec une première partie de préhension (4) et une seconde partie de préhension (5) respectivement en porte-à-faux, la première partie de préhension (4) et la seconde partie de préhension (5) ont une première fente (41) et une seconde fente (51) sur leurs surfaces d'extrémité respectivement opposées, la première fente (41) et la seconde fente (51) saisissent le diamant (2) au niveau de la partie de bord (22) en symétrie, avec la partie de couronne (21) du diamant (2) exposée du côté externe de la première partie de préhension (4) et de la seconde partie de préhension (5), le diamant (2) est fermement saisi par la force élastique du corps élastique (3), et le diamant (2) a une colette (24) qui se cale contre le corps élastique (3).

2. Structure de branche de lunettes incrustée de diamant selon la revendication 1, dans laquelle le corps de branche de lunettes (1), le corps élastique (3), la première partie de préhension (4) et la seconde partie de préhension (5) sont formés en une structure solidaire, et le contour entre le corps élastique (3) et la première partie de préhension (4) et entre le corps élastique (3) et la seconde partie de préhension (5) est de forme elliptique brisée, également en forme d'onde espacée ou en forme d'onde rectangulaire.

3. Structure de branche de lunettes incrustée de diamant selon la revendication 1 ou 2, dans laquelle, les deux côtés de la première fente (41) et de la seconde fente (51) s'adaptent à la partie de couronne (21) et à la partie de pavillon (23) du diamant (2) respectivement.

4. Paire de lunettes comprenant les structures de branche de lunettes incrustées de diamant selon la revendication 1, comprenant en outre une monture de lunettes (6) et des charnières (7), dans laquelle la monture de lunettes (6) est montée avec des verres (10) et a des courbures de branche (8) et un pont (9) et les corps de branche de lunettes (1) et les courbures de lunettes (8) sont fixés aux deux extrémités des charnières (7) respectivement.

5. Procédé d'incrustation de diamant pour une structure de branche de lunettes incrustée de diamant selon la revendication 1, comprenant les étapes suivantes consistant à : (1) sélectionner une pièce solidaire de matériau, produire un corps de branche de lunettes (1) par découpe de fil et séparer le corps de branche de lunettes (1) en un corps élastique (3), une première partie de préhension (4), une seconde partie de préhension (5) et une première fente (41) et une seconde fente (51) ; (2) courber le corps élastique (3) vers l'extérieur, placer un diamant (2) dans l'espace entre la première partie de préhension (4) et la seconde partie de préhension (5), aligner la partie de bord (22) du diamant (2) par rapport à la première fente (41) et à la seconde fente (51), et positionner le diamant (2) au centre de la première fente (41) ou de la seconde fente (51) ; (3) desserrer le corps élastique (3) tout en maintenant la position relative du diamant (2) inchangée, de sorte que la première partie de préhension (4) et la seconde partie de préhension (5) saisissent le diamant (2) fermement sous la force élastique du corps élastique (3).
